# EUROPÄISCHE PATENTANMELDUNG

(11) **EP 3 168 176 A1**
(43) Veröffentlichungstag der Anmeldung: **17.05.2017**
(21) Anmeldenummer: 16198698.9
(22) Anmeldetag: 14.11.2016
(51) Int. Cl.: B65G 47/22

(54) **FÖRDERVORRICHTUNG FÜR SPARGELSTANGEN**

(30) Priorität: 16.11.2015 DE 202015106202 U
(71) Anmelder: Neubauer, Hermann, 59514 Welver (DE); Neubauer, Christoph, 59514 Welver (DE)
(72) Erfinder: Neubauer, Hermann, 59514 Welver (DE); Neubauer, Christoph, 59514 Welver (DE)
(74) Vertreter: Basfeld, Rainer

(57) **Zusammenfassung**

Fördervorrichtung für Spargelstangen (4), umfassend ein Förderband (1), das sich in einer Förderrichtung (5) bewegen kann, wobei auf das Förderband (1) Spargelstangen (4) aufbringbar sind, sowie eine Einrichtung zur Förderung der Spargelstangen (4) in Querrichtung (10) des Förderbandes (1), wobei die Einrichtung zur Förderung der Spargelstangen (4) in Querrichtung (10) Drehmittel umfasst, deren Drehbewegung im Betrieb eine Bewegungskomponente in Querrichtung (10) des Förderbandes (1) aufweist.

## Beschreibung

Die vorliegende Erfindung betrifft eine Fördervorrichtung für Spargelstangen gemäß dem Oberbegriff des Anspruchs 1.

Eine Fördervorrichtung der vorgenannten Art ist aus der EP 1 967 470 A2 bekannt. Die darin beschriebene Fördervorrichtung umfasst eine Mehrzahl von zueinander parallelen Förderbändern, die auf ihnen liegende Spargelstangen in einer Förderrichtung bewegen können. Weiterhin umfasst die Fördervorrichtung Mittel zur Förderung der Spargelstangen in Querrichtung des mindestens einen Förderbandes, die als Schwingfördereinheit ausgebildet sind. Durch eine derartige Schwingfördereinheit werden alle Spargelstangen unabhängig von ihrer Größe in Querrichtung des mindestens einen Förderbandes bewegt. Diese Bewegung kann beispielsweise für das Abschneiden der Spargelstangen in nachfolgenden Schneideeinheiten auf eine gewünschte Länge vorteilhaft sein. Insbesondere können durch die Querförderung auch kleine Spargelstangen fußseitig angelegt werden, so dass diese in nachfolgenden Schneideeinheiten ebenfalls abgeschnitten werden können.

Dabei erweist es sich als nachteilig, dass die Schwingfördereinheit relativ kompliziert aufgebaut ist. Weiterhin werden die Spargelstangen in Abhängigkeit von ihrer Größe und sonstigen Beschaffenheit von der Schwingfördereinheit unterschiedlich effektiv in Querrichtung transportiert.

Das der vorliegenden Erfindung zugrunde liegende Problem ist die Schaffung einer Fördervorrichtung der eingangs genannten Art, die einfacher und/oder effektiver aufgebaut ist.

Dies wird erfindungsgemäß durch eine Fördervorrichtung der eingangs genannten Art mit den kennzeichnenden Merkmalen des Anspruchs 1 erreicht. Die Unteransprüche betreffen bevorzugte Ausgestaltungen der Erfindung.

Gemäß Anspruch 1 ist vorgesehen, dass die Einrichtung zur Förderung der Spargelstangen in Querrichtung Drehmittel umfasst, deren Drehbewegung im Betrieb eine Bewegungskomponente in Querrichtung des Förderbandes aufweist. Die Verwendung von Drehmitteln erweist sich als einfacher und bei entsprechender Ausgestaltung der Drehmittel auch effektiver als die aus dem Stand der Technik bekannte Schwingfördereinheit.

Es kann vorgesehen sein, dass die Drehmittel mindestens eine Rolle oder mindestens eine Rundbürste umfassen. Die mindestens eine Rolle oder die mindestens eine Rundbürste kann eine Drehachse aufweisen, die parallel zur Förderrichtung ist oder mit der Förderrichtung einen Winkel kleiner 45°, vorzugsweise kleiner 30°, insbesondere einen Winkel kleiner 20° einschließt. Vorzugsweise ist die mindestens eine Rolle oder die mindestens eine Rundbürste angetrieben. Durch eine entsprechend ausgerichtete Rolle oder Rundbürste können die Spargelstangen einfach und schnell in Querrichtung des Förderbandes bewegt werden.

Es besteht die Möglichkeit, dass die Drehmittel zwei Rollen oder zwei Rundbürsten umfassen, wobei insbesondere auf jeder Längsseite des Förderbandes eine der beiden Rollen oder Rundbürsten angeordnet ist. Durch das Vorsehen zweier Rollen oder zweier Rundbürsten auf den Außenseiten des Förderbandes wird gewährleistet, dass auch kurze Spargelstangen von den Drehmitteln erfasst und in Querrichtung gefördert werden.

Es kann vorgesehen sein, dass die beiden Rollen oder die beiden Rundbürsten sich mit gleicher Winkelgeschwindigkeit bewegen und/oder einen gleich großen Außendurchmesser aufweisen. Auf diese Weise wird gewährleistet, dass die Spargelstangen von beiden Rollen oder von beiden Rundbürsten mit der gleichen Geschwindigkeit gefördert werden.

Es besteht die Möglichkeit, dass an jeder der Längsseiten des Förderbandes eine der beiden Rollen oder eine der beiden Rundbürsten angeordnet ist, insbesondere wobei die Rollen oder die Rundbürsten in Förderrichtung des Förderbandes gleich lang sind und/oder im gleichen Bereich angeordnet sind beziehungsweise in Querrichtung des Förderbandes einander gegenüberliegen. Auf diese Weise wird gewährleistet, dass die Spargelstangen über einen großen Teil ihres Weges in Querrichtung von beiden Rollen oder beiden Rundbürsten gefördert werden, so dass ein Verschwenken der Spargelstangen verhindert wird.

Es kann vorgesehen sein, dass die mindestens eine Rolle oder die mindestens eine Rundbürste eine Länge in Förderrichtung zwischen 5 cm und 100 cm, vorzugsweise eine Länge zwischen 10 cm und 75 cm, insbesondere eine Länge zwischen 20 cm und 50 cm aufweist. Durch eine entsprechend große Länge der Rollen oder der Rundbürsten in Förderrichtung kann die Fördergeschwindigkeit in Querrichtung vergleichsweise klein gehalten werden, so dass auch auf diese Weise unerwünschte Bewegungen der Spargelstangen reduziert werden können.

Es besteht die Möglichkeit, dass die Drehbewegung der Drehmittel im Betrieb zusätzlich zu der Bewegungskomponente in Querrichtung des Förderbandes eine weitere Bewegungskomponente in Förderrichtung des Förderbandes aufweist. Diese zusätzliche Bewegungskomponente kann ebenfalls einem unerwünschten Verschwenken der Spargelstangen entgegenwirken.

Dabei kann vorgesehen sein, dass die Drehmittel eine Schnecke, vorzugsweise zwei Schnecken, umfassen. Bei der einen Schnecke oder vorzugsweise den beiden Schnecken können die Drehachsen einer jeder dieser Schnecken ebenfalls parallel zur Förderrichtung ausgerichtet sein. Durch die Spiralform der Schnecken werden die Spargelstangen nicht nur in Querrichtung gefördert, sondern auch in Förderrichtung des Förderbandes weiterbewegt, so dass ein seitliches Verschwenken der Spargelstangen verhindert wird.

Alternativ kann vorgesehen sein, dass die Drehmittel ein sackähnliches Teil, vorzugsweise zwei sackähnliche Teile, umfassen, das oder die im Betrieb eine Drehbewegung in Querrichtung und eine Drehbewegung in Förderrichtung des Förderbandes ausführen. Ähnlich den Schnecken können die sackähnlichen Teile ebenfalls eine Förderung in Querrichtung mit einer Weiterbewegung in Förderrichtung überlagern.

Es besteht die Möglichkeit, dass die Fördervorrichtung Steuermittel umfasst, die die Geschwindigkeit der Drehbewegung der Drehmittel verändern können, insbesondere in Abhängigkeit von der Geschwindigkeit des Vorschubs des Förderbandes. Auf diese Weise können lokale Gegebenheiten wie Feuchtigkeit der Oberfläche des Förderbandes oder der Spargelstangen oder auch die Oberflächenbeschaffenheit der Drehmittel und des Förderbandes berücksichtigt werden, um eine optimale Förderung in Querrichtung zu erreichen.

Es kann vorgesehen sein, dass die Fördervorrichtung seitliche Anlagemittel umfasst, die seitlich des Förderbandes beziehungsweise seitlich der Drehmittel angeordnet sind, so dass die Fußenden der Spargelstangen nach der Bewegung in Querrichtung an den Anlagemitteln anliegen. Dabei können die Anlagemittel in Förderrichtung des Förderbandes beweglich sein, insbesondere als ein sich in Förderrichtung bewegendes Band ausgebildet sein. Auf diese Weise kann verhindert werden, dass die Fußenden wegen zu großer Reibungskräfte an der seitlichen Anlage haften, während der Rest der Spargelstangen weiter in Förderrichtung bewegt wird und die Spargelstangen verschwenkt werden.

Es besteht die Möglichkeit, dass die Drehmittel Exzentermittel umfassen. Beispielsweise können die mindestens eine Rolle oder die mindestens eine Rundbürste oder die mindestens eine Schnecke oder das mindestens eine sackähnliche Teil exzentrisch gelagert sein. Dadurch führt beispielsweise die obere Oberfläche der mindestens einen Rolle während der Drehbewegung eine vertikale Bewegung nach oben und nach unten aus. Diese langsame Oszillation in vertikaler Richtung kann die Förderung der Spargelstangen in Querrichtung verbessern.

Es kann vorgesehen sein, dass das Förderband auf seiner Oberseite in regelmäßigen Abständen Vorsprünge, insbesondere trapezförmige Vorsprünge, aufweist, die zwischen sich Aufnahmemulden für die Aufnahme einzelner Spargelstangen bilden.

Weitere Merkmale und Vorteile der vorliegenden Erfindung werden deutlich anhand der nachfolgenden Beschreibung bevorzugter Ausführungsbeispiele unter Bezugnahme auf die beiliegenden Abbildungen. Darin zeigen:
- Fig. 1: eine Draufsicht auf eine Ausführungsform einer erfindungsgemäßen Fördervorrichtung;
- Fig. 2: eine Detailvergrößerung gemäß dem Pfeil II in Fig. 1 ;
- Fig. 3: einen schematischen Querschnitt durch Teile der Fördervorrichtung gemäß Fig. 1 mit einem Antriebsbeispiel für die Drehmittel.

In den Figuren sind gleiche oder funktional gleiche Teile mit gleichen Bezugszeichen versehen.

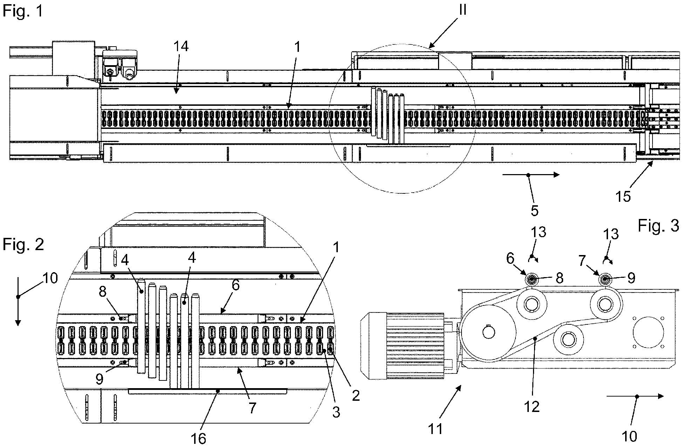

Die abgebildete Ausführungsform einer erfindungsgemäßen Fördervorrichtung umfasst ein sich von links nach rechts in Fig. 1 bewegendes Förderband 1, das auf seiner Oberseite in regelmäßigen Abständen trapezförmige Vorsprünge 2 aufweist, die zwischen sich Aufnahmemulden 3 für die Aufnahme einzelner Spargelstangen 4 bilden. Die Fördervorrichtung umfasst weiterhin nicht abgebildete Antriebsmittel, die die Oberseite des Förderbandes 1 in die mit einem Pfeil 5 versehene Förderrichtung bewegen.

Die Fördervorrichtung umfasst weiterhin Drehmittel, die im abgebildeten Ausführungsbeispiel als zwei Rollen 6, 7 ausgebildet sind (siehe Fig. 2 und Fig. 3). Anstelle der Rollen 6, 7 können auch vergleichbar gestaltete Rundbürsten vorgesehen sein.

Die Rollen 6, 7 erstrecken sich in Förderrichtung 5 und weisen jeweils eine Drehachse 8, 9 auf, die parallel zur Förderrichtung 5 ist. An jeder der Längsseiten des Förderbandes 1 ist eine der beiden Rollen 6, 7 angeordnet, wobei die Rollen 6, 7 in Längsrichtung des Förderbandes 1 beziehungsweise in Förderrichtung 5 gleich lang sind und im gleichen Bereich angeordnet sind beziehungsweise in der mit einem Pfeil 10 versehenen Querrichtung (siehe Fig. 2 und Fig. 3) einander gegenüberliegen.

Es besteht die Möglichkeit, die Rollen 6, 7 exzentrisch zu lagern, so dass ihre obere Oberfläche während der Drehbewegung zusätzlich eine Bewegung nach oben und nach unten ausführt. Diese Oszillation in vertikaler Richtung kann die Förderung der Spargelstangen in Querrichtung effektiver gestalten.

Die beiden Rollen 6, 7 werden von einer in Fig. 3 beispielhaft dargestellten Antriebseinrichtung 11 über einen Antriebsriemen 12 in eine Drehbewegung versetzt, wobei die Richtung der Drehbewegung jeweils durch einen Pfeil 13 verdeutlicht ist. Die beiden Rollen 6, 7 bewegen sich mit gleicher Winkelgeschwindigkeit und weisen gleichzeitig einen gleich großen Außendurchmesser auf, so dass eine auf den Rollen 6, 7 liegende Spargelstange 4 von jeder der Rollen 6, 7 mit der gleichen Geschwindigkeit in Querrichtung 10 bewegt wird. Dabei kann auch die gegebenenfalls vorhandene Exzentrizität der Rollen 6, 7 gleich groß sein.

Das Förderband 1 weist einen Auflagebereich 14 auf, der in Fig. 1 am linken Ende des Förderbandes 1 angeordnet ist. Auf diesen Auflagebereich 14 werden von Hand Spargelstangen 4 aufgebracht. Am in Fig. 1 rechten Ende übergibt das Förderband 1 von ihm transportierte Spargelstangen 4 beispielsweise an eine schematisch angedeutete Spargelsortiervorrichtung 15.

In dem mit den beiden Rollen 6, 7 versehenen Bereich des Förderbandes 1 werden die Spargelstangen 4 durch die Drehbewegung der Rollen 6, 7 nach unten in Fig. 1 und Fig. 2 beziehungsweise nach rechts in Fig. 3 beziehungsweise in Querrichtung 10 bewegt, bis ihre Füße an seitlichen Anlagemitteln 16 anliegen. Die seitlichen Anlagemittel 16 können beispielsweise ein Blech oder eine andere unbewegliche Fläche sein.

Es besteht aber auch die Möglichkeit, dass die seitlichen Anlagemittel 16 als ein sich in Förderrichtung 5 bewegendes Band ausgebildet sind, von dem die Füße der Spargelstangen 4 ebenfalls in Förderrichtung 5 bewegt werden.

Durch die Bewegung der Spargelstangen in Querrichtung 10 und die daraus resultierende Anlage der Füße der Spargelstangen 4 an einer seitlichen Begrenzung wird gewährleistet, dass von einem beispielsweise im Bereich der Spargelsortiervorrichtung angeordneten Messer die Enden der Spargelstangen 4 auf eine gewünschte Länge abgeschnitten werden können.

Es besteht die Möglichkeit, anstelle der Rollen 6, 7 anders gestaltete Drehmittel vorzusehen. Insbesondere kann vorgesehen sein, dass die Drehbewegung der Drehmittel im Betrieb zusätzlich zu der Bewegungskomponente in Querrichtung 10 des Förderbandes 1 eine weitere Bewegungskomponente in Förderrichtung 5 des Förderbandes 1 aufweist.

Beispielsweise kommen als derartige Drehmittel eine Schnecke oder vorzugsweise zwei Schnecken in Betracht, wobei die Drehachse einer jeder dieser Schnecken ebenfalls parallel zur Förderrichtung 5 ausgerichtet ist. Durch die Spiralform der Schnecken werden die Spargelstangen 4 nicht nur in Querrichtung 10 gefördert, sondern auch in Förderrichtung 5 des Förderbandes 1, so dass ein seitliches Verschwenken der Spargelstangen 4 verhindert wird.

Alternativ kommen als Drehmittel ein beziehungsweise zwei sackähnliche Teile in Betracht, die im Betrieb eine Drehbewegung in Querrichtung 10 und eine Drehbewegung in Förderrichtung 5 des Förderbandes 1 ausführen. Auch durch diese Gestaltung werden die Spargelstangen 4 nicht nur in Querrichtung 10 gefördert, sondern auch in Förderrichtung 5 des Förderbandes 1, so dass ein seitliches Verschwenken der Spargelstangen 4 verhindert wird.

## Patentansprüche

1. Fördervorrichtung für Spargelstangen (4), umfassend
- ein Förderband (1), das sich in einer Förderrichtung (5) bewegen kann, wobei auf das Förderband (1) Spargelstangen (4) aufbringbar sind, sowie
- eine Einrichtung zur Förderung der Spargelstangen (4) in Querrichtung (10) des Förderbandes (1),
**dadurch gekennzeichnet, dass** die Einrichtung zur Förderung der Spargelstangen (4) in Querrichtung (10) Drehmittel umfasst, deren Drehbewegung im Betrieb eine Bewegungskomponente in Querrichtung (10) des Förderbandes (1) aufweist.

2. Fördervorrichtung nach Anspruch 1, **dadurch gekennzeichnet, dass** die Drehmittel mindestens eine Rolle (6, 7) oder mindestens eine Rundbürste umfassen, insbesondere wobei die mindestens eine Rolle (6, 7) oder die mindestens eine Rundbürste angetrieben ist.

3. Fördervorrichtung nach Anspruch 2, **dadurch gekennzeichnet, dass** die mindestens eine Rolle (6, 7) oder die mindestens eine Rundbürste eine Drehachse (8, 9) aufweist, die parallel zur Förderrichtung (5) ist oder mit der Förderrichtung (5) einen Winkel kleiner 45°, vorzugsweise kleiner 30°, insbesondere einen Winkel kleiner 20° einschließt.

4. Fördervorrichtung nach einem der Ansprüche 2 oder 3, **dadurch gekennzeichnet, dass** die Drehmittel zwei Rollen (6, 7) oder zwei Rundbürsten umfassen, wobei insbesondere auf jeder Längsseite des Förderbandes (1) eine der beiden Rollen (6, 7) oder eine der beiden Rundbürsten angeordnet ist.

5. Fördervorrichtung nach Anspruch 4, **dadurch gekennzeichnet, dass** die beiden Rollen (6, 7) oder die beiden Rundbürsten sich mit gleicher Winkelgeschwindigkeit bewegen und/oder einen gleich großen Außendurchmesser aufweisen.

6. Fördervorrichtung nach einem der Ansprüche 4 oder 5, **dadurch gekennzeichnet, dass** an jeder der Längsseiten des Förderbandes (1) eine der beiden Rollen (6, 7) oder eine der beiden Rundbürsten angeordnet ist, insbesondere wobei die Rollen (6, 7) oder die Rundbürsten in Förderrichtung (5) des Förderbandes (1) gleich lang sind und/oder im gleichen Bereich angeordnet sind beziehungsweise in Querrichtung (10) des Förderbandes (1) einander gegenüberliegen.

7. Fördervorrichtung nach einem der Ansprüche 2 bis 6, **dadurch gekennzeichnet, dass** die mindestens eine Rolle (6, 7) oder die mindestens eine Rundbürste eine Länge in Förderrichtung (5) zwischen 5 cm und 100 cm, vorzugsweise eine Länge zwischen 10 cm und 75 cm, insbesondere eine Länge zwischen 20 cm und 50 cm aufweist.

8. Fördervorrichtung nach einem der Ansprüche 1 bis 7, **dadurch gekennzeichnet, dass** die Drehbewegung der Drehmittel im Betrieb zusätzlich zu der Bewegungskomponente in Querrichtung (10) des Förderbandes (1) eine weitere Bewegungskomponente in Förderrichtung (5) des Förderbandes (1) aufweist, insbesondere wobei die Drehmittel eine Schnecke, vorzugsweise zwei Schnecken, umfassen.

9. Fördervorrichtung nach Anspruch 8, **dadurch gekennzeichnet, dass** die Drehmittel ein sackähnliches Teil, vorzugsweise zwei sackähnliche Teile, umfassen, das oder die im Betrieb eine Drehbewegung in Querrichtung (10) und eine Drehbewegung in Förderrichtung (5) des Förderbandes (1) ausführen.

10. Fördervorrichtung nach einem der Ansprüche 1 bis 9, **dadurch gekennzeichnet, dass** die Drehmittel seitlich des Förderbandes (1), insbesondere auf beiden Längsseiten des Förderbandes (1) angeordnet sind, vorzugsweise wobei die beiden Drehmittel sich mit gleicher Winkelgeschwindigkeit bewegen und/oder einen gleich großen Außendurchmesser aufweisen.

11. Fördervorrichtung nach Anspruch 10, **dadurch gekennzeichnet, dass** an jeder der Längsseiten des Förderbandes (1) eines der beiden Drehmittel angeordnet ist, insbesondere wobei die Drehmittel in Förderrichtung (5) des Förderbandes (1) gleich lang sind und/oder im gleichen Bereich angeordnet sind beziehungsweise in Querrichtung (10) des Förderbandes (1) einander gegenüberliegen.

12. Fördervorrichtung nach einem der Ansprüche 1 bis 11, **dadurch gekennzeichnet, dass** die Drehmittel eine Länge in Förderrichtung (5) zwischen 5 cm und 100 cm, vorzugsweise eine Länge zwischen 10 cm und 75 cm, insbesondere eine Länge zwischen 20 cm und 50 cm aufweisen.

13. Fördervorrichtung nach einem der Ansprüche 1 bis 12, **dadurch gekennzeichnet, dass** die Fördervorrichtung Steuermittel umfasst, die die Geschwindigkeit der Drehbewegung der Drehmittel verändern können, insbesondere in Abhängigkeit von der Geschwindigkeit des Vorschubs des Förderbandes (1).

14. Fördervorrichtung nach einem der Ansprüche 1 bis 13, **dadurch gekennzeichnet, dass** die Fördervorrichtung seitliche Anlagemittel (16) umfasst, die seitlich des Förderbandes (1) beziehungsweise seitlich der Drehmittel angeordnet sind, so dass die Fußenden der Spargelstangen (4) nach der Bewegung in Querrichtung (10) an den Anlagemitteln (16) anliegen, insbesondere wobei die Anlagemittel (16) in Förderrichtung (5) des Förderbandes (1) beweglich sind, insbesondere als ein sich in Förderrichtung (5) bewegendes Band ausgebildet sind.

15. Fördervorrichtung nach einem der Ansprüche 1 bis 14, **dadurch gekennzeichnet, dass** die Drehmittel Exzentermittel umfassen, insbesondere wobei die mindestens eine Rolle (6, 7) oder die mindestens eine Rundbürste oder die mindestens eine Schnecke oder das mindestens eine sackähnliche Teil exzentrisch gelagert sind.
